# EUROPÄISCHE PATENTSCHRIFT

(11) **EP 1 169 813 B1**
(45) Veröffentlichungstag und Bekanntmachung des Hinweises auf die Patenterteilung: **18.10.2006**
(21) Anmeldenummer: 00929275.6
(22) Anmeldetag: 03.04.2000
(51) Int. Cl.: H04L 12/24, H04Q 3/00

(54) **VERFAHREN ZUR STEUERUNG VON IN EINEM KOMMUNIKATIONSNETZ ANGEORDNETEN EINRICHTUNGEN**
METHOD FOR CONTROLLING DEVICES THAT ARE ARRANGED IN A COMMUNICATIONS NETWORK
PROCEDE DE COMMANDE DE DISPOSITIFS PLACES DANS UN RESEAU DE COMMUNICATION

(30) Priorität: 16.04.1999 DE 19917383
(43) Veröffentlichungstag der Anmeldung: 09.01.2002
(73) Patentinhaber: SIEMENS AKTIENGESELLSCHAFT, 80333 München (DE)
(72) Erfinder: ERSTAD, Jakob, High Wycombe, Buckinghamshire HP13 5XP (GB); FRANKL, Martina, D-84095 Furth (DE)
(86) Internationale Anmeldenummer: PCT/DE2000/001005
(87) Internationale Veröffentlichungsnummer: WO 2000/064101

(56) Entgegenhaltungen:
- EP-A- 0 843 268
- LANDRU J ET AL: "MODULAR OPEN NETWORK AGENT FOR CONTROL OPERATIONS" IEEE NETWORK OPERATIONS AND MANAGEMENT SYMPOSIUM,US,NEW YORK, NY: IEEE, Bd. CONF. 10, 15. Februar 1998 (1998-02-15), Seiten 600-609, XP000799531 ISBN: 0-7803-4352-2
- ASHOK S ET AL: "JAVA: network-centric enterprise computing" COMPUTER COMMUNICATIONS,NL,ELSEVIER SCIENCE PUBLISHERS BV, AMSTERDAM, Bd. 20, Nr. 16, 1998, Seiten 1467-1480, XP004113227 ISSN: 0140-3664
- COVACI S ET AL: "JAVA-BASED INTERLLIGENT MOBILE AGENTS FOR OPEN SYSTEM MANAGEMENT" IEEE INTERNATIONAL CONFERENCE ON TOOLS WITH ARTIFICIAL INTELLIGENCE,US,LOS ALAMITOS, CA: IEEE COMPUTER SOC, 3. November 1997 (1997-11-03), Seiten 492-501, XP000782974 ISBN: 0-8186-8204-3

## Beschreibung

Aus der Produktschrift "Sonderausgabe telcom report und Siemens Magazin Com: ISDN im Büro - HICOM", Siemens AG, Berlin und München, 1985, insbesondere der Seiten 32 bis 37 ist ein Kommunikationssystem mit einer privaten Kommunikationsanlage HICOM bekannt, bei der über einen mit der Kommunikationsanlage verbundenen sogenannten Betriebs- und Datenserver ausgehend von einer kommunikationssystem-externen Zentrale eine Fernverwaltung bzw. eine Fernwartung der Kommunikationsanlage HICOM möglich ist. Durch die Fernverwaltung bzw. die Fernwartung können beispielsweise neue Anwendungen für die Kommunikatiohsanlage ohne einen Einsatz von Personal vor Ort in die Kommunikationsanlage implementiert werden, so daß einerseits eine kürzere Reaktionszeit auf Anderungswünsche von Kunden und andererseits eine erhöhte Verfügbarkeit der Kommunikationsanlage erreicht wird.

In modernen Kommunikationssystemen ist eine Kommunikationsanlage vielfach an ein lokales Rechnernetz - in der Literatur häufig als LAN (Lokal Area Network) bezeichnet - angeschlossen, über das die Kommunikationsanlage mit einer Vielzahl von Datenverarbeitungseinrichtungen - beispielsweise Personal Computern oder sogenannten 'Workstations' - verbunden ist. Eine Steuerung bzw. Wartung der an einem derartigen lokalen Rechnernetz angeschlossenen Einrichtungen erfolgt dabei in der Regel vor Ort manuell an den jeweiligen Einrichtungen.

Alternativ hierzu ist aus Landru J. et al: "Modular Open Network Agent For Control Operations" IEEE Network Operations and Management Symposium, US, New York, NY, IEEE Bd. Conf. 10, 15. Februar 1998, XP000799531, ISBN: 0-7803-4352-2, insbesondere der Seiten 600 bis 609, eine universelle Netzwerk Management Teilnehmerschnittstelle bekannt, durch die ein Zugriff auf eine an ein lokales Netzwerk angeschlossene 'Network Management Station (NMS)' von einer externen Datenverarbeitungseinrichtung aus realisiert werden kann. Hierbei wird von der externen Datenverarbeitungseinrichtung ('Remote administrator with a web browser') ein 'HTTP request' an einen im lokalen Netzwerk angeordneten 'Web Server' übermittelt. Der 'Web Server' übermittelt einen entsprechenden 'CGI request' an die 'Network Management Station (NMS)', die wiederum einen entsprechenden 'NMP request' an die zu steuernde Einrichtung ('Managed Equipment') übermittelt. Als Antwort auf den 'NMP request' sendet die zu steuernde Einrichtung eine 'NMP response' an die 'Network Management Station (NMS)', die wiederum eine entsprechende 'CGI response' an den 'Web Server' übermittelt. Abschließend sendet der 'Web Server' eine 'HTTP response' an die externe Datenverarbeitungseinrichtung, an welcher der Inhalt der 'HTTP response' in Form einer HTML Seite angezeigt werden kann. Aufgrund der Vielzahl der zu übermittelnden Nachrichten und der Vielzahl der an dem Verfahren beteiligten Einrichtungen ist das beschriebene Verfahren jedoch mit einem recht hohen Aufwand verbunden.

Der vorliegenden Erfindung liegt daher die Aufgabe zugrunde, ein Verfahren anzugeben, durch welches eine Steuerung der an einem lokalen Rechnernetz angeschlossenen Einrichtungen ausgehend von einer zentralen Einrichtung mit einem geringeren Aufwand ermöglicht werden kann.

Die Lösung dieser Aufgabe erfolgt erfindungsgemäß mit den Merkmalen des Patentanspruchs 1.

Ein wesentlicher Vorteil des erfindungsgemäßen Verfahrens besteht darin, daß durch ein Laden der, die Steuerung der Einrichtungen kontrollierenden Steueranwendung von einer zentralen, an das Rechnernetz angeschlossenen Datenverarbeitungseinrichtung auf eine rechnernetz-externe oder rechnernetzinterne Datenverarbeitungseinrichtung, eine zentrale Steuerung der an das Rechnernetz angeschlossenen Einrichtungen von einer beliebigen Datenverarbeitungseinrichtung aus erfolgen kann. Dadurch kann von jedem beliebigen Ort aus eine Verwaltungs- bzw. Wartungsfunktion für die zu steuernden Einrichtungen ausgeführt werden.

Vorteilhafte Weiterbildungen der Erfindung sind in den Unteransprüchen angegeben.

Ein Vorteil von in den Unteransprüchen definierten Ausgestaltungen der Erfindung besteht unter anderem darin, daß durch ein Zwischenspeichern von, zwischen der zentralen Datenverarbeitungseinrichtung und den Einrichtungen zu übermittelnden Informationen jeweils in einer, in den Einrichtungen eingerichteten Kommunikationsdatei auf einfache Weise eine Ansteuerung unterschiedlich ausgestalteter, in den jeweiligen Einrichtungen implementierten Steuereinheiten realisiert werden kann. Die Steuereinheiten müssen hierbei lediglich die Anforderung erfüllen, Informationen aus einer Datei lesen und bewerten zu können bzw. Informationen in eine Datei schreiben zu können.

Ein weiterer Vorteil von in den Unteransprüchen definierten Ausgestaltungen der Erfindung besteht darin, daß durch eine Ausgestaltung der zentralen Datenverarbeitungseinrichtung als sogenannten 'HTTP-Server' (HyperText Transport Protocol) und durch die Verwendung eines sogenannten 'Browsers' als Visualisierungseinheit für die Datenverarbeitungseinrichtung eine Unabhängigkeit von der Art der verwendeten Datenverarbeitungseinrichtung bzw. von dem auf der Datenverarbeitungseinrichtung installierten Betriebssystem - in der Literatur wird in diesem Zusammenhang oft von einer Plattformunabhängigkeit gesprochen - erreicht wird.

Ein Ausführungsbeispiel der Erfindung wird im folgenden anhand der Zeichnung näher erläutert.

Dabei zeigen:
- Fig. 1:: ein Strukturbild zur schematischen Darstellung der beim erfindungsgemäßen Verfahren beteiligten wesentlichen Funktionseinheiten;
- Fig. 2a, 2b, 2c:: jeweils Teile eines Ablaufdiagramms zur Veranschaulichung der beim erfindungsgemäßen Verfahren ablaufenden wesentlichen Verfahrensschritte.

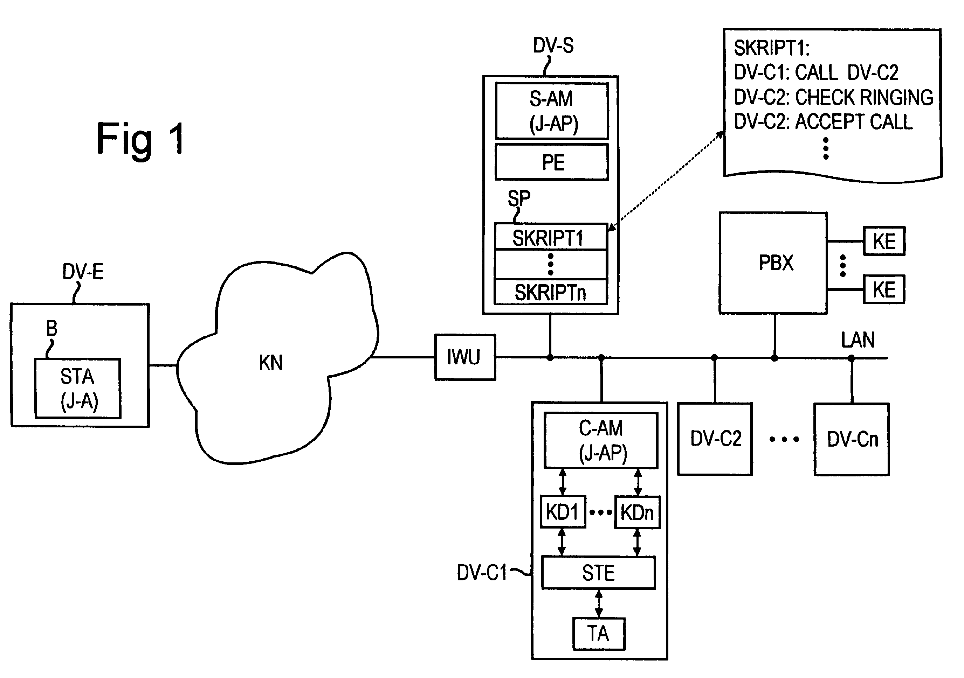

Fig. 1 zeigt in einer schematischen Darstellung ein lokales Rechnernetz LAN, an das mehrere Datenverarbeitungseinrichtungen DV - beispielsweise Personal Computer oder sogenannte 'Workstations' - und eine Kommunikationsanlage PBX angeschlossen sind. Über die Kommunikationsanlage PBX sind Kommunikationsendgerät KE mit dem lokalen Rechnernetz LAN verbunden. Das lokale Rechnernetz LAN ist über eine Interworking-Einheit IWU mit einem Kommunikationsnetz KN - beispielsweise mit einem ISDN-orientierten Kommunikationsnetz oder mit dem sogenannten 'Internet' - verbunden. Die Interworking-Einheit IWU realisiert hinsichtlich ihrer wesentlichen Funktion die Schicht 3 (Vermittlungsschicht) des OSI-Referenzmodells (Open Systems Interconnection), wobei mit Hilfe der Interworking-Einheit IWU Netze mit jeweils unterschiedlicher Topologie der Schichten 1 (Bitübertragungsschicht) und 2 (Sicherungsschicht) des OSI-Referenzmodells - beispielsweise ein Ethernet-LAN und ein ISDN-orientiertes Kommunikationsnetz - physikalisch miteinander verbindbar sind. Um Datenpakete zwischen den an der Interworking-Einheit IWU angeschlossenen unterschiedlichen Netzen vermitteln zu können, werden die in Routinginformationen der Datenpakete enthaltenen Adressinformationen - im wesentlichen eine Ziel- und eine Ursprungsadresse - von einer in der Interworking-Einheit IWU befindlichen Steuereinrichtung interpretiert und bewertet. Anschließend werden die Datenpakete für eine Übermittlung protokollgerecht konvertiert und weiterübermittelt.

Alternativ kann die Verbindung des lokalen Rechnernetzes LAN mit dem Kommunikationsnetz KN auch durch eine, in der Kommunikationsanlage PBX implementierte, die Funktionen der Interworking-Einheit realisierende Baugruppe erfolgen. Diese Baugruppe ist dabei über eine LAN-Anschlußeinheit an das lokale Rechnernetz LAN und über eine - nicht dargestellte - Netz-Anschlußeinheit mit dem Kommunikationsnetz KN verbunden.

An das Kommunikationsnetz KN ist eine rechnernetz-externe Datenverarbeitungseinrichtung DV-E angeschlossen. Die rechnernetz-externe Datenverarbeitungseinrichtung DV-E weist eine Visualisierungseinheit B - in der Literatur häufig als 'Browser' bezeichnet - zur Anzeige von auf dem bekannten HTTP-Protokoll (HyperText Transport Protocol) basierenden Informationen auf. Ausgehend von der rechnernetz-externen Datenverarbeitungseinrichtung DV-E soll eine zentrale Steuerung der, an das lokale Rechnernetz LAN angeschlossenen Datenverarbeitungseinrichtungen DV und der Kommunikationsanlage PBX erfolgen. Alternativ kann die Steuerung der, an das lokale Rechnernetz LAN angeschlossene Einrichtungen DV-C, PBX ausgehend von einer rechnernetz-internen Datenverarbeitungseinrichtung erfolgen.

Für die Steuerung der an das lokale Rechnernetz LAN angeschlossenen Datenverarbeitungseinrichtungen DV und der Kommunikationsanlage PBX durch die rechnernetz-externe Datenverarbeitungseinrichtung DV-E ist im lokalen Rechnernetz LAN eine sogenannte 'Client-Server-Architektur' eingerichtet. Hierbei ist eine der Datenverarbeitungseinrichtungen als steuernde, zentrale Datenverarbeitungseinrichtung DV-S - in der Literatur häufig als 'Server' bezeichnet - und die zu steuernden Datenverarbeitungseinrichtungen als dezentrale Datenverarbeitungseinrichtungen DV-C1,...,DV-Cn - in der Literatur häufig als 'Clients' bezeichnet - ausgebildet.

In der zentralen Datenverarbeitungseinrichtung DV-S ist ein in Software implementiertes, zentrales Applikationsmodul S-AM eingerichtet. Das zentrale Applikationsmodul S-AM ist im vorliegenden Ausführungsbeispiel in der bekannten Programmiersprache JAVA implementiert - in der Literatur häufig als Java-Application (in der Figur durch ein in Klammern gesetztes J-AP angedeutet) bezeichnet - wodurch eine Unabhängigkeit von der Art der verwendeten zentralen Datenverarbeitungseinrichtung DV-S bzw. von dem auf der zentralen Datenverarbeitungseinrichtung DV-S installierten Betriebssystem erreicht wird. Zur Steuerung der dezentralen Datenverarbeitungseinrichtungen DV-C1,...,DV-Cn bzw. der Kommunikationsanlage PBX durch die rechnernetz-externe Datenverarbeitungseinrichtung DV-E wird mittels der Visualisierungseinheit B der rechnernetz-externen Datenverarbeitungseinrichtung DV-E eine Steueranwendung STA - in der Literatur häufig als Java-Applet (in der Figur durch ein in Klammern gesetztes J-A angedeutet) bezeichnet - vom zentralen Applikationsmodul S-AM geladen und an der rechnernetz-externen Datenverarbeitungseinrichtung DV-E angezeigt. Solange die Steueranwendung STA an der rechnernetz-externen Datenverarbeitungseinrichtung DV-E aktiviert ist, kann durch eine Übermittlung entsprechender Nachrichten eine Steuerung des zentralen Applikationsmoduls S-AM durch die rechnernetz-externe Datenverarbeitungseinrichtungen DV-E erfolgen. Eine Übermittlung der Nachrichten erfolgt dabei beispielsweise auf Basis des bekannten JAVA RMI-Protokolls (Remote Measured Invokation).

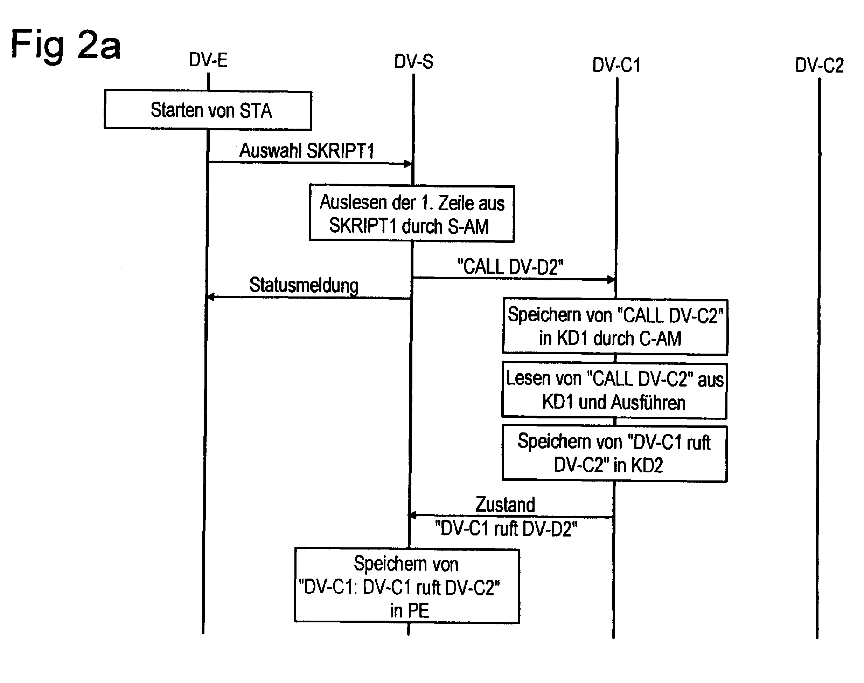

Des weiteren sind in einem, in der zentralen Datenverarbeitungseinrichtung DV-S angeordneten Speicher SP eine Mehrzahl von Steuersequenzen SKRIPT1,...,SKRIPTn gespeichert. Die Steuersequenzen SKRIPT1,...,SKRIPTn weisen jeweils eine Folge von einzelnen Steuerbefehlen zur Steuerung der dezentralen Datenverarbeitungseinrichtungen DV-C1,...,DV-Cn bzw. der Kommunikationsanlage PBX auf. Beispielhaft ist ein Ausschnitt einer ersten Steuersequenz SKRIPT1 dargestellt, die im Zusammenhang mit den Figuren 2a - 2c näher erläutert wird. Zusätzlich weist die zentrale Datenverarbeitungseinrichtung DV-S eine Protokolleinheit PE auf, in der von den dezentralen Datenverarbeitungseinrichtungen DV-C1,...,DV-Cn bzw. der Kommunikationsanlage PBX an die zentrale Datenverarbeitungseinrichtung DV-S übermittelte Zustandsinformationen speicherbar sind. Die in der Protokolleinheit PE gespeicherten Zustandsinformationen werden infolge einer, von der rechnernetz-externen Datenverarbeitungseinrichtung DV-E gesendeten und an der zentralen Datenverarbeitungseinrichtung DV-S empfangenen Anforderungsmeldung durch das zentrale Applikationsmodul S-AM aus dem Speicher SP ausgelesen und an die rechnernetz-externe Datenverarbeitungseinrichtung DV-E übermittelt. Mittels der Visualisierungseinheit B werden die übermittelten Zustandsinformationen an der rechnernetz-externen Datenverarbeitungseinrichtung DV-E einem Benutzer angezeigt.

Die zu steuernden dezentralen Datenverarbeitungseinrichtungen DV-C1,..., DV-Cn weisen jeweils ein, dem zentralen Applikationsmodul S-AM zugeordnetes dezentrales Applikationsmodul C-AM auf. Analog zum zentralen Applikationsmodul S-AM sind die dezentralen Applikationsmodule C-AM ebenfalls in der bekannten Programmiersprache JAVA implementiert (in der Figur durch ein in Klammern gesetztes J-AP angedeutet). Durch das dezentrale Applikationsmodul C-AM werden über das lokale Rechnernetz LAN an eine dezentrale Datenverarbeitungseinrichtung DV-C1,..., DV-Cn übermittelte Informationen - im vorliegenden Ausführungsbeispiel von dem zentralen Applikationsmodul S-AM übermittelte Befehle - vom lokalen Rechnernetz LAN gelesen und in eine, in der dezentralen Datenverarbeitungseinrichtung DV-C1, ...,DV-Cn dafür eingerichtete Kommunikationsdatei KD1,...,KDn eingespeichert.

Des weiteren weisen die dezentralen Datenverarbeitungseinrichtungen DV-C1,...,DV-Cn jeweils eine Steuereinheit STE auf. Die Steuereinheit STE überwacht die in der dezentralen Datenverarbeitungseinrichtung DV-C1,...,DV-Cn eingerichtete Kommunikationsdatei KD1,...,KDn. Sind in der Kommunikationsdatei KD1,...,KDn Informationen - im vorliegenden Ausführungsbeispiel von dem zentralen Applikationsmodul S-AM übermittelte Befehle - gespeichert, werden diese durch die Steuereinheit STE ausgelesen und für eine Steuerung einer, auf der dezentralen Datenverarbeitungseinrichtungen DV-C1,..., DV-Cn laufenden beliebigen Anwendung umgesetzt. Im vorliegenden Ausführungsbeispiel ist die Anwendung eine sogenannte Telefonanwendung TA, durch die einem Benutzer an einer Datenverarbeitungseinrichtung alle Funktionsmerkmale eines herkömmlichen Telefons zur Verfügung stehen.

Zusätzlich werden durch die Steuereinheit STE von der Telefonanwendung TA übermittelte Zustandsinformationen in eine weitere Kommunikationsdatei KD1,...,KDn eingespeichert. Das dezentrale Applikationsmodul C-AM überwacht die weitere Kommunikationsdatei KD1,...,KDn und liest in Fällen, in denen Zustandsinformationen in der weiteren Kommunikationsdatei KD1,...,KDn gespeichert sind, diese aus der weiteren Kommunikationsdatei KD1,...,KDn aus und übermittelt sie über das lokale Rechnernetz LAN an das zentrale Applikationsmodul S-AM. Das zentrale Applikationsmodul S-AM speichert diese übermittelten Zustandsinformationen zusammen mit einer, die sendende dezentrale Datenverarbeitungseinrichtung DV-C1,..., DV-C2 identifizierenden Adreßinformation in der Protokolleinheit PE ab.

Die Steuereinheit STE kann beispielsweise als Steuerprogramm in den dezentralen Datenverarbeitungseinrichtungen DV-C1,..., DV-Cn implementiert sein. Ein Beispiel für ein derartiges Steuerprogramm ist der sogenannte "WinRunner" der Firma Mercury Interactive Corporation.

Fig. 2a zeigt ein Ablaufdiagramm mit den beim erfindungsgemäßen Verfahren ablaufenden wesentlichen Verfahrensschritten. Für eine zentrale Steuerung der, an dem lokalen Rechnernetz LAN angeschlossenen dezentralen Datenverarbeitungseinrichtungen DV-C1,...,DV-Cn bzw. der Kommunikationsanlage PBX durch die rechnernetz-externe Datenverarbeitungseinrichtung DV-E wird in einem ersten Schritt durch die Visualisierungseinheit B der rechnernetz-externen Datenverarbeitungseinrichtung DV-E die Steueranwendung STA von dem zentralen Applikationsmodul S-AM auf die rechnernetz-externe Datenverarbeitungseinrichtung DV-E geladen.

Nach einer erfolgten Auswahl einer Steuersequenz SKRIPT1,..., SKRIPTn durch die Steueranwendung STA werden die Befehle der - im vorliegenden Ausführungsbeispiel - ausgewählten ersten Steuersequenz SKRIPT1 durch das zentrale Applikationsmodul S-AM nacheinander abgearbeitet. Hierbei wird durch das zentrale Applikationsmodul S-AM die erste Zeile der ausgewählten ersten Steuersequenz SKRIPT1 aus dem Speicher SP ausgelesen und der, in der ersten Zeile gespeicherte Befehl "CALL DV-C2" wird über das lokale Rechnernetz LAN an die, durch die erste Zeile adressierte erste dezentrale Datenverarbeitungseinrichtung DV-C1 übermittelt. Zusätzlich übermittelt das zentrale Applikationsmodul S-AM eine Statusmeldung - beispielsweise "erster Befehl an DV-C1 übermittelt" - über den Status der Abarbeitung der ausgewählten ersten Steuersequenz SKRIPT1 durch das zentrale Applikationsmodul S-AM an die rechnernetz-externe Datenverarbeitungseinrichtung DV-E. Die übermittelte Statusmeldung wird daraufhin an der Visualisierungseinheit B der rechnernetz-externen Datenverarbeitungseinrichtung DV-E angezeigt, so daß ein Benutzer zusätzlich zu den in der Protokolleinheit PE gespeicherten Informationen 'online' über den Abarbeitungsstatus der ersten Steuersequenz SKRIPT1 informiert wird.

Das dezentrale Applikationsmodul C-AM der adressierten ersten dezentralen Datenverarbeitungseinrichtung DV-C1 liest den übermittelten Befehl "CALL DV-C2" vom lokalen Rechnernetz LAN und speichert diesen in einer dafür eingerichteten ersten Kommunikationsdatei KD1 der ersten dezentralen Datenverarbeitungseinrichtung DV-C1. Die, die erste Kommunikationsdatei KD1 überwachende Steuereinheit STE der ersten dezentralen Datenverarbeitungseinrichtung DV-C1 liest den gespeicherten Befehl "CALL DV-C2" aus der ersten Kommunikationsdatei KD1 aus und wandelt diesen in einen entsprechenden Steuerbefehl für die Telefonanwendung TA um. Eine infolge einer erfolgreichen Ausführung des Befehls "CALL DV-C2" durch die Telefonanwendung TA abgegebene Zustandsinformation "DV-C1 ruft DV-D2" über den Status der, auf der ersten dezentralen Datenverarbeitungseinrichtung DV-C1 ablaufenden Telefonanwendung TA wird durch die Steuereinheit STE in einer dafür eingerichteten zweiten Kommunikationsdatei KD2 gespeichert.

Abschließend liest das, die zweite Kommunikationsdatei KD2 der ersten dezentralen Datenverarbeitungseinrichtung DV-C1 überwachende dezentrale Applikationsmodul C-AM die gespeicherte Zustandsinformation "DV-C1 ruft DV-D2" aus der zweiten Kommunikationsdatei KD2 aus und übermittelt diese über das lokale Rechnernetz LAN an die zentrale Datenverarbeitungseinrichtung DV-S, welche die Zustandsinformation "DV-C1 ruft DV-D2" zusammen mit einer, die erste dezentrale Datenverarbeitungseinrichtung DV-C1 bezeichnenden Adreßinformation in der Protokolleinheit PE abspeichert. Die Übermittlung der Befehle und der Zustandsinformationen über das lokale Rechnernetz LAN erfolgt dabei beispielsweise auf Basis des bekannten TCP/IP-Protokolls (Transmission Control Protocol / Internet Protocol).

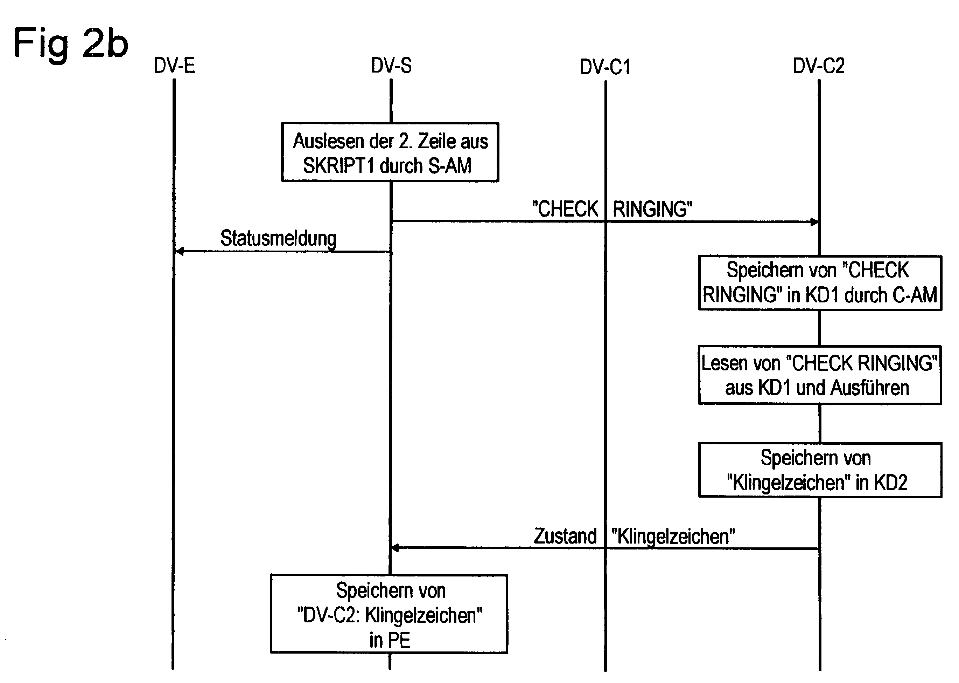

Fig. 2b zeigt ein Ablaufdiagramm mit den beim Abarbeiten des zweiten Befehls der ausgewählten ersten Steuersequenz SKRIP1 ablaufenden wesentlichen Verfahrensschritten. Nach dem erfolgreichen Abarbeiten der ersten Zeile der ausgewählten ersten Steuersequenz SKRIPT1 wird die zweite Zeile der ausgewählten ersten Steuersequenz SKRIPT1 durch das zentrale Applikationsmodul S-AM aus dem Speicher SP ausgelesen und der, in der zweiten Zeile gespeicherte Befehl "CHECK RINGING" wird über das lokale Rechnernetz LAN an die, durch die zweite Zeile adressierte zweite dezentrale Datenverarbeitungseinrichtung DV-C2 übermittelt. Zusätzlich übermittelt das zentrale Applikationsmodul S-AM wiederum eine Statusmeldung - beispielsweise "zweiter Befehl an DV-C2 übermittelt" - über den Status der Abarbeitung der ausgewählten ersten Steuersequenz SKRIPT1 durch das zentrale Applikationsmodul S-AM an die rechnernetz-externe Datenverarbeitungseinrichtung DV-E.

Das dezentrale Applikationsmodul C-AM der adressierten zweiten dezentralen Datenverarbeitungseinrichtung DV-C2 liest den übermittelten Befehl "CHECK RINGING" vom lokalen Rechnernetz LAN und speichert diesen in einer dafür eingerichteten ersten Kommunikationsdatei KD1 der zweiten dezentralen Datenverarbeitungseinrichtung DV-C2. Der in der ersten Kommunikationsdatei KD1 gespeicherte Befehl "CHECK RINGING" wird anschließend durch die Steuereinheit STE der zweiten dezentralen Datenverarbeitungseinrichtung DV-C2 ausgelesen und in einen entsprechenden Steuerbefehl für die Telefonanwendung TA umgewandelt. Eine infolge einer erfolgreichen Ausführung des Befehls "CHECK RINGING" durch die Telefonanwendung TA abgegebene Zustandsinformation "Klingelzeichen" über den Status der, auf der zweiten dezentralen Datenverarbeitungseinrichtung DV-C2 ablaufenden Telefonanwendung TA wird durch die Steuereinheit STE in einer dafür eingerichteten zweiten Kommunikationsdatei KD2 der zweiten dezentralen Datenverarbeitungseinrichtung DV-C2 gespeichert.

Abschließend liest das, die zweite Kommunikationsdatei KD2 der zweiten dezentralen Datenverarbeitungseinrichtung DV-C2 überwachende, dezentrale Applikationsmodul C-AM die gespeicherte Zustandsinformation "Klingelzeichen" aus der zweiten Kommunikationsdatei KD2 aus und übermittelt diese über das lokale Rechnernetz LAN an die zentrale Datenverarbeitungseinrichtung DV-S, welche die Zustandsinformation "Klingelzeichen" zusammen mit einer, die zweite dezentrale Datenverarbeitungseinrichtung DV-C2 bezeichnenden Adreßinformation in der Protokolleinheit PE abspeichert.

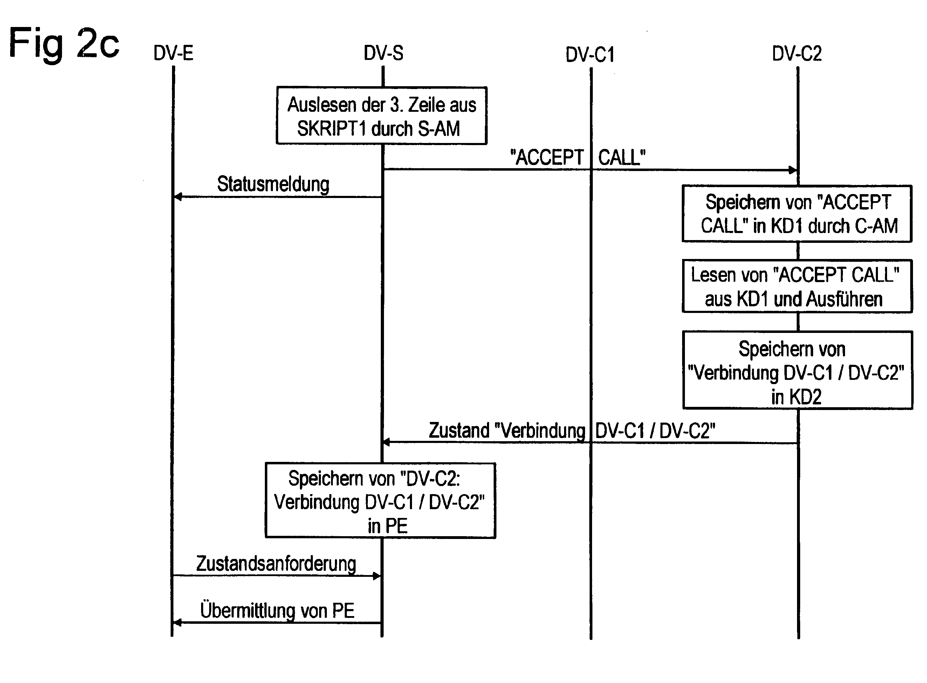

Fig. 2c zeigt ein Ablaufdiagramm mit den beim Abarbeiten des dritten Befehls der ausgewählten ersten Steuersequenz SKRIP1 ablaufenden wesentlichen Verfahrensschritten. Nach dem erfolgreichen Abarbeiten der zweiten Zeile der ausgewählten ersten Steuersequenz SKRIPT1 wird die dritte Zeile der ausgewählten ersten Steuersequenz SKRIPT1 durch das zentrale Applikationsmodul S-AM aus dem Speicher SP ausgelesen und der, in der dritten Zeile gespeicherte Befehl "ACCEPT CALL" wird über das lokale Rechnernetz LAN an die, durch die dritte Zeile adressierte zweite dezentrale Datenverarbeitungseinrichtung DV-C2 übermittelt. Zusätzlich übermittelt das zentrale Applikationsmodul S-AM wiederum eine Statusmeldung - beispielsweise "dritter Befehl an DV-C2 übermittelt" - über den Status der Abarbeitung der ausgewählten ersten Steuersequenz SKRIPT1 durch das zentrale Applikationsmodul S-AM an die rechnernetz-externe Datenverarbeitungseinrichtung DV-E.

Das dezentrale Applikationsmodul C-AM der adressierten zweiten dezentralen Datenverarbeitungseinrichtung DV-C2 liest den übermittelten Befehl "ACCEPT CALL" vom lokalen Rechnernetz LAN und speichert diesen wiederum in der ersten Kommunikationsdatei KD1 der zweiten dezentralen Datenverarbeitungseinrichtung DV-C2. Der in der ersten Kommunikationsdatei KD1 gespeicherte Befehl "ACCEPT CALL" wird anschließend durch die Steuereinheit STE der zweiten dezentralen Datenverarbeitungseinrichtung DV-C2 ausgelesen und in einen entsprechenden Steuerbefehl für die Telefonanwendung TA umgewandelt. Eine infolge einer erfolgreichen Ausführung des Befehls "ACCEPT CALL" durch die Telefonanwendung TA abgegebene Zustandsinformation "Verbindung DV-C1 / DV-C2" über den Status der, auf der zweiten dezentralen Datenverarbeitungseinrichtung DV-C2 ablaufenden Telefonanwendung TA wird durch die Steuereinheit STE in der zweiten Kommunikationsdatei KD2 gespeichert.

Abschließend liest das, die zweite Kommunikationsdatei KD2 der zweiten dezentralen Datenverarbeitungseinrichtung DV-C2 überwachende, dezentrale Applikationsmodul C-AM die gespeicherte Zustandsinformation "Verbindung DV-C1 / DV-C2" aus der zweiten Kommunikationsdatei KD2 aus und übermittelt diese über das lokale Rechnernetz LAN an die zentrale Datenverarbeitungseinrichtung DV-S, welche die Zustandsinformation "Verbindung DV-C1 / DV-C2" zusammen mit einer, die zweite dezentrale Datenverarbeitungseinrichtung DV-C2 bezeichnenden Adreßinformation in der Protokolleinheit PE abspeichert.

Die in der Protokolleinheit PE gespeicherten Zustandsinformationen "DV-C1: DV-C1 ruft DV-C2", "DV-C2: Klingelzeichen" und "DV-C2: Verbindung DV-C1 / DV-C2" werden nach einer Ubermittlung einer Anforderungsmeldung durch die rechnernetz-externe Datenverarbeitungseinrichtung DV-E an die zentrale Datenverarbeitungseinrichtung DV-S durch das zentrale Applikationsmodul S-AM der zentralen Datenverarbeitungseinrichtung DV-S aus der Protokolleinheit PE ausgelesen und an die rechnernetz-externe Datenverarbeitungseinrichtung DV-E übermittelt. Eine Übermittlung der Zustandsinformationen "DV-C1: DV-C1 ruft DV-C2", "DV-C2: Klingelzeichen" und "DV-C2: Verbindung DV-C1 / DV-C2" an die rechnernetz-externe Datenverarbeitungseinrichtung DV-E erfolgt dabei beispielsweise auf Basis des HTTP-Protokolls (HyperText Transport Protocol) als sogenannte HTML-Seite (HyperText Markup Language).

Zur Steuerung der an das lokale Rechnernetz LAN angeschlossenen Kommunikationsanlage PBX ist in der zentralen Datenverarbeitungseinrichtung DV-S zusätzlich zum zentralen Applikationsmodul S-AM ein weiteres - nicht dargestelltes - Applikationsmodul implementiert, durch das eine Umsetzung der in den Steuersequenzen SKRIPT1,...,SKRIPTn gespeicherten Befehle auf kommunikationsanlagen-spezifische Befehle erfolgt. Derartige kommunikationsanlagen-spezifische Befehle werden in der Literatur häufig kurz als AMO (Administration and Maintenance Order) bezeichnet.

## Patentansprüche

1. Verfahren zur Steuerung von in einem Rechnernetz (LAN) angeordneten Einrichtungen (DV-C, PBX) mittels einer Datenverarbeitungseinrichtung (DV-E),
wobei an das Rechnernetz (LAN) eine zentrale Datenverarbeitungseinrichtung (DV-S) angeschlossenen ist, in der in einem Speicher (SP) jeweils aus einer Folge von Befehlen bestehende Steuersequenzen (SKRIPT1,...,SKRIPTn) gespeichert sind,
wobei nach einer, durch eine aus der zentralen Datenverarbeitungseinrichtung (DV-S) heruntergeladenen und auf der Datenverarbeitungseinrichtung (DV-E) ablaufenden Steueranwendung (STA) erfolgten Auswahl einer der gespeicherten Steuersequenzen (SKRIPT1,...,SKRIPTn), die Befehle dieser ausgewählten Steuersequenz (SKRIPT1,...,SKRIPTn) nacheinander von der zentralen Datenverarbeitungseinrichtung (DV-S) über das Rechnernetz (LAN) an mehrere der Einrichtungen (DV-C, PBX) übermittelt werden, und
wobei auf **den** Einrichtungen (DV-C, PBX) **jeweils** laufende Anwendungen (TA) von einer, in den Einrichtungen (DV-C, PBX) implementierten Steuereinheit (STE) anhand der übermittelten Befehle, gesteuert werden.

2. Verfahren nach Anspruch 1,
**dadurch gekennzeichnet,**
**daß** die Datenverarbeitungseinrichtung (DV-E) an ein, über eine Interworking-Einheit (IWU) mit dem Rechnernetz (LAN) verbundenes Kommunikationsnetz (KN) angeschlossen ist.

3. Verfahren nach Anspruch 2,
**dadurch gekennzeichnet,**
**daß** die Interworking-Einheit (IWU) eine Kommunikationsanlage (PBX) mit einer dieser zugeordneten Netz-Anschlußeinheit zum Anschluß an das Kommunikationsnetz (KN) und einer LAN-Anschlußeinheit zum Anschluß an das Rechnernetz (LAN) ist, und daß durch die Kommunikationsanlage (PBX) eine bidirektionale Umwandlung zwischen dem Datenformat des Kommunikationsnetzes (KN) und des Rechnernetzes (LAN) erfolgt.

4. Verfahren nach einem der vorhergehenden Ansprüche,
**dadurch gekennzeichnet,**
**daß** in der zentralen Datenverarbeitungseinrichtung (DV-S) ein zentrales Applikationsmodul (S-AM) und in den Einrichtungen (DV-C, PBX) jeweils ein, dem zentralen Applikationsmodul (S-AM) zugeordnetes, dezentrales Applikationsmodul (C-AM) ausgeführt werden, und
**daß** von dem zentralen Applikationsmodul (S-AM) nach der erfolgten Auswahl einer Steuersequenz (SKRIPT1,...,SKRIPTn) die Befehle der ausgewählten Steuersequenz (SKRIPT1,...,SKRIPTn) nacheinander aus dem Speicher (SP) ausgelesen und über das Rechnernetz (LAN) an das dezentrale Applikationsmodul (C-AM) der entsprechenden Einrichtung (DV-C, PBX) übermittelt werden.

5. Verfahren nach Anspruch 4,
**dadurch gekennzeichnet,**
**daß** von dem dezentralen Applikationsmodul (C-AM) ein empfangener Befehl in eine, in der jeweiligen Einrichtung (DV-C, PBX) eingerichtete Kommunikationsdatei (KD1,...,KDn) einspeichert wird,
und **daß** von der in der Einrichtung (DV-C, PBX) implementierten Steuereinheit (STE) der Befehl aus der Kommunikationsdatei (KD1,...,KDn) ausgelesen wird.

6. Verfahren nach Anspruch 5,
**dadurch gekennzeichnet,**
**daß** von der Steuereinheit (STE) Zustandsmeldungen über den aktuellen Zustand der, auf der Einrichtung (DV-C, PBX) laufenden Anwendungen (TA) in eine weitere Kommunikationsdatei (KD1,..., KDn) eingespeichert werden,
**daß** von dem dezentralen Applikationsmodul (C-AM) diese Zustandsmeldungen aus der weiteren Kommunikationsdatei (KD1, ...,KDn) ausgelesen und über das Rechnernetz (LAN) an das zentrale Applikationsmodul (S-AM) übermittelt werden,
und **daß** von dem zentralen Applikationsmodul (S-AM) die empfangenen Zustandsmeldungen in einer, in der zentralen Datenverarbeitungseinrichtung (DV-S) angeordneten Protokolleinheit (PE) abgespeichert werden.

7. Verfahren nach Anspruch 6,
**dadurch gekennzeichnet,**
**daß** zusätzlich zur Zustandsmeldung eine, die sendende Einrichtung (DV-C, PBX) identifizierende Adreßinformation in der Protokolleinheit (PE) gespeichert wird.

8. Verfahren nach Anspruch 6 oder 7,
**dadurch gekennzeichnet,**
**daß** die in der Protokolleinheit (PE) gespeicherten Zustandsmeldungen nach Empfang einer, durch die Datenverarbeitungseinrichtung (DV-E) übermittelte Anforderungsmeldung durch das zentrale Applikationsmodul (S-AM) an die Datenverarbeitungseinrichtung (DV-E) übermittelt werden.

9. Verfahren nach einem der Ansprüche 4 bis 8,
**dadurch gekennzeichnet,**
**daß** von dem zentralen Applikationsmodul (S-AM) nach einer Übermittlung eines Befehls an eine Einrichtung (DV-C, PBX) automatisch eine Statusmeldung über den Abarbeitungsstatus der ausgewählten Steuersequenz (SKRIPT1,...,SKRIPTn) an die Datenverarbeitungseinrichtung (DV-E) übermittelt wird.

10. Verfahren nach einem der vorhergehenden Ansprüche,
**dadurch gekennzeichnet,**
**daß** Daten zwischen dem zentralen Applikationsmodul (S-AM) und der Datenverarbeitungseinrichtung (DV-E) auf Basis des HTTP-Protokolls (HyperText Transport Protocol) übermittelt werden.

11. Verfahren nach Anspruch 10,
**dadurch gekennzeichnet,**
**daß** die Datenverarbeitungseinrichtung (DV-E) eine Visualisierungseinheit (B) aufweist, mittels der auf dem HTTP-Protokoll basierende Informationen an der Datenverarbeitungseinrichtung (DV-E) angezeigt werden.

## Claims

1. Method for controlling devices (DV-C, PBX), arranged in a computer network (LAN), by means of a data processing device (DV-E),
in which method a central data processing device (DV-S) in which control sequences (SKRIPT1,...,SKRIPTn), each composed of a sequence of instructions, are stored in a memory (SP) is connected to the computer network (LAN),
in which method, after one of the stored control sequences (SKRIPT1,...,SKRIPTn) has been selected, said selection having been made by a control application (STA) which has been downloaded from the central data processing device (DV-S) and which runs on the data processing device (DV-E), the instructions of this selected control sequence (SKRIPT1,...,SKRIPTn) are successively transferred from the central data processing device (DV-S) via the computer network (LAN) to a plurality of the devices (DV-C, PBX), and
in which method applications (TA) running in each case on the devices (DV-C, PBX) are controlled by a control unit (STE), implemented in the devices (DV-C, PBX), by means of the transferred instructions.

2. Method according to Claim 1, **characterized in that** the data processing device (DV-E) is connected to a communications network (KN) which is connected to the computer network (LAN) via an interworking unit (IWU).

3. Method according to Claim 2, **characterized in that** the interworking unit (IWU) is a communications system (PBX) with a network connecting unit, assigned to the latter, for connecting to the communications network (KN), and with a LAN connecting unit for connecting to the computer network (LAN), and
**in that** the communications system (PBX) performs a bidirectional transfer between the data format of the communications network (KN) and of the computer network (LAN).

4. Method according to one of the preceding claims, **characterized in that** a central applications module (S-AM) is carried out in the central data processing device (DV-S), and in each case one decentralized applications module (C-AM), assigned to the central applications module (S-AM), is carried out in the devices (DV-C, PBX), and
**in that**, after the selection of a control sequence (SKRIPT1,...,SKRIPTn) has been made, the central applications module (S-AM) successively reads out the instructions of the selected control sequence (SKRIPT1,...,SKRIPTn) from the memory (SP) and transfers them via the computer network (LAN) to the decentralized applications module (C-AM) of the respective device (DV-C, PBX).

5. Method according to Claim 4, **characterized in that** the decentralized applications module (C-AM) stores a received instruction in a communications file (KD1,...,KDn) which is set up in the respective device (DV-C, PBX),
and **in that** the control unit (STE) implemented in the device (DV-C, PBX) reads out the instruction from the communications file (KD1,...,KDn).

6. Method according to Claim 5, **characterized in that** the control unit (STE) stores status messages on the current status of the applications (TA) running on the device (DV-C, PBX) in a further communications file (KD1,...,KDn),
**in that** the decentralized applications module (C-AM) reads out the status messages from the other communications file (KD1,...,KDn) and transfers them via the computer network (LAN) to the central applications module (S-AM),
and **in that** the central applications module (S-AM) stores the received status messages in a protocol unit (PE) arranged in the central data processing device (DV-S).

7. Method according to Claim 6, **characterized in that**, in addition to the status message, address information identifying the transmitting device (DV-C, PBX) is stored in the protocol unit (PE).

8. Method according to Claim 6 or 7, **characterized in that** the status messages stored in the protocol unit (PE) are transferred to the data processing device (DV-E) after the central applications module (S-AM) has received a request message transferred by the data processing device (DV-E).

9. Method according to one of Claims 4 to 8, **characterized in that**, after an instruction has been transferred to a device (DV-C, PBX), the central applications module (S-AM) automatically transfers a status message on the execution status of the selected control sequence (SKRIPT1,...,SKRIPTn) to the data processing device (DV-E).

10. Method according to one of the preceding claims, **characterized in that** data is transferred between the central applications module (S-AM) and the data processing device (DV-E) on the basis of the HTTP protocol (HyperText Transport Protocol).

11. Method according to Claim 10, **characterized in that** the data processing device (DV-E) has a display unit (B) by means of which information based on the HTTP protocol is displayed on the data processing device (DV-E).

## Revendications

1. Procédé de commande de dispositifs (DV-C, PBX) disposés dans un réseau d'ordinateurs (LAN) au moyen d'un dispositif de traitement de données (DV-E),
un dispositif central de traitement de données (DV-S) étant raccordé au réseau d'ordinateurs (LAN), dans lequel dispositif central de traitement de données sont mémorisées, dans une mémoire (SP), des séquences de commande (SKRIPT1, ... SKRIPTn) respectivement constituées d'une suite d'instructions,
après sélection de l'une des séquences de commande (SKRIPT1, ... SKRIPTn) mémorisées, réalisée au moyen d'une application de commande (STA)téléchargée à partir du dispositif central de traitement de données (DV-S) et, exécutée sur le dispositif de traitement de données (DV-E), les instructions de cette séquence de commande (SKRIPT1, ... SKRIPTn) étant transmises les unes après les autres à plusieurs des dispositifs (DV-C, PBX) par le dispositif central de traitement de données (DV-S) par l'intermédiaire du réseau d'ordinateurs (LAN), et
des applications (TA) respectivement exécutées sur les dispositifs (DV-C, PBX) étant commandées à l'aide des instructions transmises par une unité de commande (STE) implémentée dans les dispositifs (DV-C, PBX).

2. Procédé selon la revendication 1,
**caractérisé en ce**
**que** le dispositif de traitement de données (DV-E) est connecté à un réseau de communication (KN) relié au réseau d'ordinateurs (LAN) par l'intermédiaire d'une unité d'interworking (IWU).

3. Procédé selon la revendication 2,
**caractérisé en ce**
**que** l'unité d'interworking (IWU) est une installation de communication (PBX) avec une unité de raccordement au réseau, affectée à cette unité d'interworking pour le raccordement au réseau de communication (KN), et une unité de raccordement LAN pour le raccordement au réseau d'ordinateurs (LAN), et
en ce qu'une conversion bidirectionnelle entre les formats de données du réseau de communication (KN) et du réseau d'ordinateurs (LAN) est réalisée au moyen de l'installation de communication (PBX).

4. Procédé selon l'une quelconque des revendications précédentes,
**caractérisé en ce**
**qu'**un module d'application central (S-AM) est exécuté dans le dispositif central de traitement de données (DV-S) et en ce qu'un module d'application décentralisé (C-AM), affecté au module d'application central (S-AM), est respectivement exécuté dans les dispositifs (DV-C, PBX) et
en ce qu'après la sélection d'une séquence de commande (SKRIPT1, ... SKRIPTn), les instructions de la séquence de commande sélectionnée (SKRIPT1, ... SKRIPTn) sont lues les unes après les autres par le module d'application central (S-AM) à partir de la mémoire (SP) et sont transmises au module d'application décentralisé (C-AM) du dispositif correspondant (DV-C, PBX) par l'intermédiaire du réseau d'ordinateurs (LAN).

5. Procédé selon la revendication 4,
**caractérisé en ce**
**qu'**une instruction reçue est mémorisée par le module d'application décentralisé (C-AM) dans un fichier de communication (KD1, ..., KDn) configuré dans le dispositif respectif (DV-C, PBX),
et en ce que l'instruction provenant du fichier de communication (KD1, ..., KDn) est lue par l'unité de commande (STE) implémentée dans le dispositif (DV-C, PBX).

6. Procédé selon la revendication 5,
**caractérisé en ce**
**que** des messages d'état concernant l'état momentané des applications (TA) exécutées sur le dispositif (DV-C, PBX) sont mémorisés par l'unité de commande (STE) dans un fichier de communication supplémentaire (KD1, ..., KDn),
en ce que ces messages d'état sont lus par le module d'application décentralisé (C-AM) à partir du fichier de communication supplémentaire (KD1, ..., KDn) et sont transmis au module d'application central (S-AM) par l'intermédiaire du réseau d'ordinateurs (LAN),
et en ce que les messages d'état reçus sont mémorisés par le module d'application central (S-AM) dans une unité de protocole (PE) disposée dans le dispositif central de traitement de données (DV-S).

7. Procédé selon la revendication 6,
**caractérisé en ce**
**que**, en plus du message d'état, une information d'adresse identifiant le dispositif émetteur (DV-C, PBX) est mémorisée dans l'unité de protocole (PE).

8. Procédé selon la revendication 6 ou 7,
**caractérisé en ce**
**que** les messages d'état mémorisés dans l'unité de protocole (PE) sont transmis au dispositif de traitement de données (DV-E) par le module d'application central (S-AM), après la réception d'un message de demande transmis par le dispositif de traitement de données (DV-E).

9. Procédé selon l'une quelconque des revendications 4 à 8,
**caractérisé en ce**
**qu'**un message d'état concernant l'état de déroulement de la séquence de commande sélectionnée (SKRIPT1, ... SKRIPTn) est transmis automatiquement au dispositif de traitement de données (DV-E) par le module d'application central (S-AM) après une transmission d'une instruction à un dispositif (DV-C, PBX).

10. Procédé selon l'une quelconque des revendications précédentes,
**caractérisé en ce**
**que** des données sont transmises entre le module d'application central (S-AM) et le dispositif de traitement de données (DV-E) sur la base du protocole HTTP (HyperText Transport Protocol).

11. Procédé selon la revendication 10,
**caractérisé en ce**
**que** le dispositif de traitement de données (DV-E) présente une unité de visualisation (B) au moyen de laquelle des informations basées sur le protocole HTTP sont affichées sur le dispositif de traitement de données (DV-E).
